(19) Europäisches Patentamt

European Patent Office

Office européen des brevets

(11) Publication number: **0 075 608**
**B1**

(12) **EUROPEAN PATENT SPECIFICATION**

(45) Date of publication of patent specification: **18.09.85**

(21) Application number: **81107659.5**

(22) Date of filing: **26.09.81**

(51) Int. Cl.⁴: **C 02 F 1/28, C 02 F 1/40,**
**B 01 D 15/00, B 01 D 17/02**

(54) Method and apparatus for the separation of oil from water.

(43) Date of publication of application:
**06.04.83 Bulletin 83/14**

(45) Publication of the grant of the patent:
**18.09.85 Bulletin 85/38**

(84) Designated Contracting States:
**BE DE FR GB NL**

(56) References cited:
**DE-A-1 767 713**
**FR-A-2 196 187**
**FR-A-2 205 486**
**US-A-3 520 806**
**US-A-3 750 688**
**US-A-3 888 766**
**US-A-4 172 031**

(73) Proprietor: **THE DOW CHEMICAL COMPANY**
**2030 Dow Center Abbott Road P.O. Box 1967**
**Midland, MI 48640 (US)**

(72) Inventor: **Larson, Edwin Gunnar**
**3046 East Miller Road**
**Midland Michigan (US)**
Inventor: **Haigh, Daniel H.**
**2130 North Eleven Mile Road**
**Sanford Michigan (US)**
Inventor: **Hall, Richard Harold**
**1187 East Stewart**
**Midland Michigan (US)**

(74) Representative: **Hann, Michael, Dr. et al**
**Marburger Strasse 38**
**D-6300 Giessen (DE)**

## Description

This invention refers to a method and an apparatus for the removal of organic liquids or oils from an aqueous stream.

US—A—4 172 031 describes a self-blocking oil filter using oil-swellable cross-linked polymer beads in admixture with a polymer foam.

US—A—3 888 766 describes an oil-absorbing composition with a foam material which is sealed by a natural rubber material which may be in the form of a latex. Furthermore, it is mentioned that such compositions swell when they contact oil.

FR—A—2 196 187 describes a method for removing small quantities of oil from water (e.g. 15 to 20 ppm) which comprises passing the contaminated water stream through a filter. The filter includes a first layer made up of fibrous discs of glass wool and a second layer made from fibrous discs, or a fibrous block, of glass or mineral wool which are impregnated. The fibres are covered with a layer of synthetic resin which is oleophilic. The arrangement is such that when the fibres have been loaded with a predetermined amount of oil, the filter becomes plugged to prevent water passing through.

The object of the invention to provide a self-blocking oil filter being more sensitive and effective than the known devices.

This technological problem is solved by the apparatus and the method of its use according to the claims.

This invention provides a method for the removal of organic liquids or oils from an aqueous stream, which comprises passing an aqueous stream, preferably containing less than 1000 parts per million by weight of an oil, through an oil-sorbing bed, the sorbing bed comprising at least a first foraminous body which permits flow of water therethrough, the foraminous body has an oil-imbibing coating swellable in contact with these materials disposed on the surface thereof. The amount of said coating being sufficent that on swelling with oil, the volume is sufficient to plug interstitial spaces within the foraminous body and prevent flow of water therethrough. The coating is a generally coherent mass of oil-imbibing latex particles, the latex particles being oil-swellable and oil-insoluble, the latex particles being swellable in oil from 2 to 50 times their unswollen volume.

The invention also provides an apparatus for the removal of oil from aqueous streams, the streams preferably containing not more than 1000 parts per million by weight of oil based on the weight of the stream, the apparatus comprising means defining a stream receiving channel, a first foraminous sorption bed transversely disposed in the channel, the sorption bed being permeable to water and in sealing engagement with means defining the channel, whereby water flowing within the channel must flow through the bed.

The foraminous body has an organic liquid or oil-imbibing coating swellable in contact with these materials disposed on the surface thereof in an amount sufficient that on swelling with oil the foraminous body is plugged and is no longer permeable to the aqueous stream. The oil-imbibing coating comprises a latex coating of an oil-imbibing polymer which swells from 2 to 50 times the unswollen volume of the coating when contacted with oil. The coating is a generally coherent mass of polymer latex particles.

By the term "oil" is meant oils or organic liquids which are generally immiscible with water or soluble to not more than 2 weight percent in water at 25°C and atmospheric pressure. Such oils include: petroleum oils such as, for example, kerosene, lubricating oil, gasoline, jet fuel, and fuel oil. Other oils include: benzene, toluene, xylene, ethylbenzene, aliphatic hydrocarbons such as, for example, hexane, octane, dodecane, eicosane, position isomers thereof, cyclic hydrocarbons such as cyclohexane, ethylcyclohexane, ketones such as, for example, 2-octenone, 4-dodecenone, and chlorinated solvents such as, for example, 1,1,1-trichloroethane and o-dichlorobenzene.

Further features and advantages of the present invention will become more apparent from the following specification taken in connection with the drawing, wherein:

Figure 1 is a schematic representation of a filter apparatus in accordance with the invention; and

Figure 2 is a partly-in-section schematic representation of a foraminous body employed in the apparatus of Figure 1.

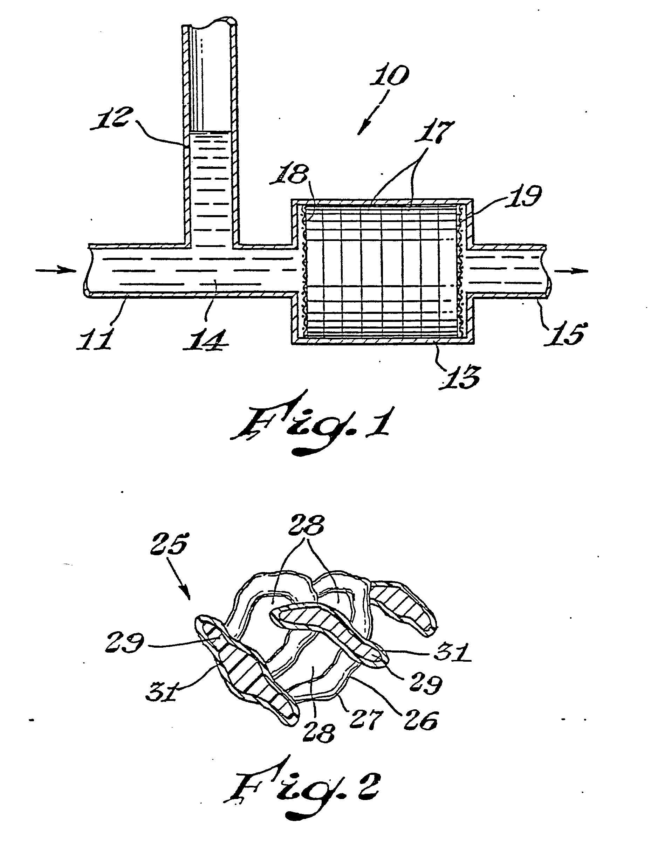

In Figure 1 there is schematically depicted an apparatus in accordance with the present invention generally designated by the reference numeral 10. The apparatus 10 comprises in cooperative combination a conduit or channel-defining means 11. The conduit 11 has a vertically-extending leg or means to indicate pressure drop 12 open to the atmosphere and an enlarged, filter bed containing portion 13. The conduit 11 contains an aqueous stream 14 flowing in the direction indicated by the arrows. The stream 14 contains preferably less than 1000 parts by weight of an oil or organic compound per million parts by volume of water. The conduit 11 has a discharge portion 15 remotely disposed from the leg 12 and disposed adjacent to the enlarged portion 13. A plurality of foraminous filter elements 17 are disposed within the enlarged portion 13 of the conduit 11 and are in generally sealing relationship with the adjacent portions of the enlarged portion 13 of the conduit 11. Adjacent the leg 12 is a foraminous filter bed retaining means 18 such as a metal screen. A second retaining means 18 is disposed generally adjacent the discharge end 15. The foraminous filter elements 17 as depicted in Figure 1, are of generally planar discoidal configuration and permit the flow of water therethrough. Each of the foraminous elements 17 has a surface coating (not shown) of an oil-imbibing latex, the oil-imbibing latex being oil-swellable and oil-insoluble, the coating being swellable from 2 to 50 times the volume of the unswollen coating.

In Figure 2 there is schematically depicted a fractional sectional view of a filter element 25. The filter element 25 comprises a foraminous body 26 having a plurality of cell walls 27 and a plurality of interstitial spaces 28. The element 25 comprises a foraminous substrate 29 which is generally water insoluble. The substrate 29 has disposed on the surface thereof an oil-imbibing coating 31. The oil-imbibing coating 31 is an oil-swellable latex coating having the hereinbefore-described oil swelling characteristics. In operation of the apparatus and practice of the method of the invention, an aqueous stream containing smll quantities of oil is passed into conduit 11 as indicated by the arrow in Figure 1. The aqueous stream passes through the filter elements 17 and is discharged from the discharge portion of the conduit 15. Small quantities of oil within the stream are imbibed by the latex coating such as the coating 31. The coating 31, as oil is added thereto, swells to form a plurality of swollen latex particles which agglomerate into viscous blobs which are carried downstream in the filter elements 17 and contact unswollen coating which removes the portion of the oil from the generally highly swollen particles in contact therewith to form blobs or globs of viscous agglomerated oil-swollen latex particles which reach a size sufficient to cause plugging of the filter, that is, the interstitial spaces are plugged sufficiently to prevent flow of the aqueous stream therethrough. As the filter elements 17 become plugged, the level of the stream rises in the leg 12 until a predetermined head is obtained and the stream end is shut off or diverted to another like filter and the filter elements 17 replaced with elements having an unswollen latex coating. In the practice of the present invention, a wide variety of materials may be employed as a substrate to support the oil-imbibing latex coating. Materials which are particularly desirable are flexible synthetic resinous foams such as, for example, open-cell polyurethane foams, open-cell polyolefin foams such as polyethylene foams, polypropylene foams, polybutene foams, polyvinylchloride foams, polybutadiene foams, polyisoprene foams and other rubber foams. Other materials useful as a substrate for coating with the oil-imbibing latex include, for example, sand, vermiculite, bagasse, straw, sawdust, granular petroleum and wood charcoals, cokes, ground automobile and truck tires, metal shot, glass beads and glass foams. Also suitable are fibrous bodies which employ natural or synthetic fibers in woven or nonwoven configuration. For many applications, it is desirable that the substrate be unaffected by the oil or organic liquid contained within the aqueous stream. This is particularly true where such sorbent beds will have a relatively long exposure to a contaminated aqueous stream. However. for many applications, a substrate may be employed which is slowly attacked by the organic material within the aqueous stream. Typical of such applications are filters in which the pressure drop across them is continously monitored and replacement is made rapidly when the filter has been plugged. It is generally essential that the rate of swelling or the latex polymer coating be substantially greater than the rate of swelling or dissolving of the substrate. For applications wherein an organic liquid sensitive substrate is employed, generally it is desirable that the swellable latex polymer swell at least twice the rate at which the substrate swells or dissolves.

Latex polymers useful in the practice of the present invention are latexes of any polymers which swell on contact with oils. Useful latex polymers may swell on contact with water. However, additional swelling must occur when contacted with the oil or organic material to be removed. Selection of a polymer for use with any oil or organic liquid is readily accomplished by determining a swelling index for the latex polymer particles in the particular liquid to be soaked or imbibed. Beneficially, such a swelling index is readily determined by immersing a latex polymer in the desired oil or organic liquid and determining the volume per unit weight of latex polymer after a period of 30 minutes with water and oil. The ratio of the volume per unit weight with organic liquid and without the oil or oragnic liquid provides the swelling index. If the polymer is soluble, the swelling index is infinite. If the swelling index is greater than 1.2, the polymer particles are useful in the practice of the present invention. Beneficially, for most applications, a swelling index of at least 1.5 and preferably greater than 3 is desirable. It is critical to the practice of the present invention to employ a crosslinked polymer which swells but does not dissolve. If the polymer swells in the presence of the organic liquid and water, it is suitable for the practice of the present invention.

However, for most applications, it is desirable to employ a polymer which is crosslinked to a sufficient degree that it exhibits a swelling index between 1.5 and 50 and preferably between 3 and 50. A wide variety of polymeric materials are employed with benefit. Such polymers include polymers of styrenes and substituted styrenes; polyvinyl chloride, copolymers of vinyl chloride such as a copolymer of 60 weight percent vinyl chloride and 40 weight percent vinyl acetate; polymers and copolymers of vinylidene chloride including a copolymer of 75 percent vinylidene chloride and 25 percent arcrylonitrile; acrylic polymers such as polymers of methylmethacrylate, ethyl acrylate and the like. In general, the chemical composition of the polymers is not critical. The polymers must show significant swelling; that is, at least 25 percent increase in volume in a period of at least 10 minutes in the organic liquid to which the polymers are required to respond under desired service conditions of temperature and pressure. Particularly advantageous materials which respond to a wide variety of organic liquids are polymers of styrene such as polystyrene and polymers of styrene and divinylbenzene containing up to 10 weight percent divinylbenzene. For general use with aliphatic and aromatic hydrocarbons, alkylstyrene polymers and copolymers are of particular benefit. Such alkylstyrene polymers swell very rapidly on contact with aliphatic and/or aromatic hydrocarbons. Generally, the more rapid the swelling of the polymer the more rapid the shutoff when the organic liquid is contacted. Alkylstyrene polymers and copolymers usually show substantial swelling when in contact with so called No. 2 diesel oil in less than one minute.

Preferably, crosslinked polymers and copolymers of styrenes, and advantageously of tertiary-alkylstyrenes, are utilized as the imbibing latex polymers in the process of this invention. Those alkylstyrenes which can be used to prepare these polymers have alkyl groups containing from 4 to 20, and preferably from 4 to 12, carbon atoms such as, for example, tertiary-alkylstyrenes, n-alkylstyrenes, sec-alkylstyrenes, isoalkylstyrenes and copolymers thereof.

Especially preferred for use in the practice of the invention are crosslinked copolymers of such alkylstyrenes as heretofore described and an alkyl ester derived from $C_1$ to $C_{24}$ alcohol and acrylic or methacrylic acid or mixture thereof.

Suitable monomers which may be employed as comonomers with the alkylstyrene include such materials as, for example, vinylnaphthalenes, styrene, vinyltoluenes, α-methylstyrene, ring substituted α-methylstyrenes, halostyrenes, arylstyrenes and alkarylstyrenes; methacrylic esters, acrylic esters, fumarate esters and half esters, maleate esters and half esters, itaconate esters and half esters, vinyl biphenyls, vinyl esters of aliphatic carboxylic acids, alkyl vinyl ethers, alkyl vinyl ketones, α-olefins, isoolefins, butadiene, isoprene, dimethylbutadiene, acrylonitrile and methacrylonitrile.

It is desirable that the latex polymers used in the process of the invention contain a slight amount of crosslinking agent, preferably in the range of from 0.01 to 2 percent by weight. The most efficient imbibition of oil and the like organic liquid contaminants occurs when the level of crosslinking agent is less than 1 percent since this permits the polymers to swell easily and imbibe a substantial volume of the organic material. When organic liquid-contaminated water is percolated through a sorption bed containing 25 volume percent latex polymer coating, up to 2 percent cross-linking agent is satisfactory because a lower volume of organic material imbibed by the polymer can be tolerated in this type of operation.

Crosslinking agents which can be used in preparing the imbibing latex polymers suitable for use in the present invention include polyethylenically unsaturated compounds such as, for example, divinylbenzene, diethylene glycol dimethacrylate, diisopropenylbenzene, diisopropenyldiphenyl, diallylmaleate, diallylphthalate, allylacrylates, allylmethacrylates, allylfumarates, allylitaconates, alkyd resin types, butadiene or isoprene polymers, cyclooctadiene, methylene norbornylenes, divinyl phthalates, vinylisopropenylbenzene, divinylbiphenyl, as well as any other di- or poly-functional compounds known to be of use as a crosslinking agent in these polymeric vinyl addition compositions. Normally, the latex polymer containing the crosslinking agent swells with the imbibed organic material. If there is too much crosslinking agent, the imbibition takes an unreasonably long time or the latex polymer is unable to imbibe a sufficient quantity of the organic liquid to close the interstitial spaces in the bed. If the imbibitional polymer contains no crosslinking agent or too little crosslinking agent, then it will dissolve eventually in the organic material resulting, for example, into a non-discrete, non-particulate mass of polymer-thickened organic liquid which may not effectively stop the flow.

Polymers for the practice of the present invention are prepared by emulsion polymerization processes and advantageously are free radical catalyzed or initiated. For most applications, it is desirable that latexes for use in the practice of the present invention have a particle size of from 500 to 2000 Å, although smaller and larger latex particles may be employed.

## Example

An oil-imbibing latex was prepared by polymerizing 30 parts by weight of a mixture of 70 percent by weight tertiary-butylstyrene, 20 percent by weight of 2-ethylhexyl acrylate, 10 percent by weight of mixed methacrylate esters of cetyl to eicosyl alcohols, and 0.075 percent by weight (active), based on the weight of the foregoing three monomers, of a one-to-one by weight mixture of divinylbenzene and diethylbenzene, in the presence of 70 parts by weight of water containing one-half part by weight based on monomers (BOM) of potassium persulfate, one percent by weight based on the weight of the monomers of sodium bicarbonate, two percent by weight BOM of a surface active agent which was a sodium salt of mixed long chain alkyl sulfates. The polymerization was conducted in the following manner: 20 percent of the water containing the potassium persulfate and sodium bicarbonate and 2 weight percent of the total monomer mixture was added to the reactor. The reactor was agitated and heated to 80°C for a period of one-half hour. At the end of the half-hour period, the remaining monomer and water solution of potassium persulfate and bicarbonate was added at a constant rate over a period of five hours. At the end of the addition of monomer and water, the reaction mixture was maintained at 80°C with agitation for an additional one-hour period. At the end of the one-hour period, the reaction vessel and contents were cooled to 35°C. The reaction mixture was filtered to remove any coagulum. A latex was obtained having a particle size of about 1000 Å which was 28.2 percent solids. The resultant latex was employed to coat a plurality of open-cell polyurethane discs, (3½ inches) 8.9 cm in diameter and (¼ inch) 0.635 cm in thickness. The discs were coated by dipping into the latex, squeezing excess latex therefrom and drying at 80°C for a period of 16 hours. The dip, squeeze and dry procedure was repeated to provide various coating weights on the polyurethane foam. The polyurethane foam had a density of (1.7 lb/ft³) 27.23 kg/m³ and 41 ± 5 pores per (lineal inch) 2.54 cm and an air-flow rate of (8 ft³/minute) 226.63 liters/minute through a (4 in²) 25.8 cm² sample, (¼ inch) 0.635 cm thick under a pressure of 124.54 Pa.

A plurality of experiments were conducted using coated urethane discs having various coating weights of the latex thereon and discs having no coating thereon. The apparatus employed was that as generally depicted in Figure 1 and the effluent to be filtered was water containing No. 2 fuel oil. The test apparatus was fed water at a rate of 25 gallons 94.64 liters per hour and No. 2 fuel oil at 25 ml/hour. Prior to entry of the water-oil mixture into the foraminous disc filter, the water and oil were admixed with a propeller-type agitator to provide a fine dispersion of the oil in water. The experiments were discontinued when water rose in the leg equivalent to the leg 12 at a height of 48 inches (121.9 cm) or when there was evidence of oil passing through the filter assembly. A first set of urethane foam discs was employed which had no latex coating. The head level, that is, the height of water, in the leg 12 after one hour was about 3 inches (7.62 cm) and an oil slick appeared in the effluent at this time. A set of discs which had a coating weight of 23. 8 percent of the hereinbefore described latex was employed and the initial head was about 5 inches (12.7 cm) and a slick appeared after 2½ hours at a head height of approximately 6 inches (15.24 cm). Three series of discs were then used having coating weights of 59.7 weight percent latex solids, 33.5 weight percent latex solids and 55.5 weight percent latex solids. Head height of 48 inches (121.9 cm) with no slick breakthrough was achieved after about 3 hours and 10 minutes with the discs coated with 59.7 and 55.5 latex solids with no apparent breakthrough of the fuel oil. The urethane foam coated with 33.5 weight percent latex solids provided head height of 48 inches (121.9 cm) in slightly under 3 hours. In all cases, a small but unmeasured quantity of duPont Oil Red A (an oil soluble dye) was incorporated in the fuel oil to aid in determining its distribution within the coated foam discs. In all cases where the water was passed through the latex-coated foam samples and no evidence of the oil appeared, that is, the red coloration did not extend entirely through the bed, no evidence of oil in the effluent was obtained by either odor or taste.

Due to the wide variety of organic materials which can be separated from water employing the present invention, the wide variety of oil-imbibing latexes and the wide variety of substrates, if it is desirable to determine the suitability of any combination of organic material, latex and substrate, and latex-coating weight, a convenient method of determining the suitability of the combination is to provide a coated bed, 6 inches (15.24 cm) in thickness, and add in a dropwise manner the organic liquid to be removed from the aqueous stream at a temperature of 24°C. Beneficially, in such an experiment, it is convenient to include a dye which readily indicates the presence of the organic liquid in the bed. If the six-inch (15.24 cm) bed plugs do not permit flow of the organic liquid under a 6 inch (15.24 cm) head, the combination is suitable for the practice of the invention.

**Claims**

1. A method for the removal of organic liquids or oils from an aqueous stream, the steps of the method comprising passing an aqueous stream containing less than 1000 parts per million by weight of an organic liquid or oil, through a sorbing bed comprising at least a first foraminous body which permits flow of water therethrough, the foraminous body has an organic liquid or oil-imbibing coating swellable in contact with these materials disposed on the surface thereof in an amount being sufficient that on swelling with organic liquid or oil, the volume is sufficient to plug interstitial spaces within the foraminous body and prevent flow of water therethrough, characterized in that the coating is a generally coherent mass of latex particles, the latex particles being of a crosslinked polymer being swellable in organic liquid or oil from 2 to 50 times their unswollen volume.

2. The method of Claim 1 wherein the foraminous body is coherent.

3. The method of Claim 1 wherein the foraminous body is particulate.

4. The method of Claim 1 including the step of monitoring the pressure drop through the foraminous body.

5. The method of Claim 2 wherein the foraminous body is an open-cell plastic foam.

6. An apparatus for the removal of organic liquid or oil from aqueous streams, the streams preferably containing not more than 1000 parts per million by weight based on the weight of the stream of organic liquid or oil, comprising means defining a stream receiving channel, a first foraminous sorption bed transversely disposed in the channel, the sorption bed being permeable to water and in sealing engagement with means defining the channel, whereby water flowing within the channel must flow through the bed, the foraminous body has an organic liquid or oil-imbibing coating swellable in contact with these materials disposed on the surface thereof in an amount being sufficient that on swelling, the foraminous body is plugged and is no longer permeable to the aqueous stream, characterized in that the coating is a generally coherent mass of polymer latex particles which swells from 2 to 50 times the unswollen volume of the coating when contacted with organic liquid or oil.

7. The apparatus of Claim 6 wherein the foraminous body is a coherent body.

8. The apparatus of Claim 6 wherein the foraminous body is a particulate body.

9. The apparatus of Claim 6 including means to indicate pressure drop through the foraminous body.

10. The apparatus of Claim 6 wherein the foraminous body is a plastic foam.

## Patentansprüche

1. Verfahren zum Entfernen von organischen Flüssigkeiten oder Ölen aus einem Wasserstrom, das die Schritte aufweist, Hindurchleiten eines Wasserstromes, der weniger als 1000 Gew.Tl./Million einer organischen Flüssigkeit oder Öl enthält, durch ein Absorberbett enthaltend mindestens einen durchlöcherten Körper, der den Durchtritt von Wasser erlaubt, wobei der durchlöcherte Körper auf seiner Oberfläche eine organische Flüssigkeit oder Öl aufsaugende, bei Kontakt mit diesen Stoffen quellende Beschichtung in einer ausreichenden Menge aufweist, daß das durch organische Flüssigkeit oder Öl aufquellende Volumen ausreicht, um die Zwischenräume im durchlöcherten Körper auszufüllen und den Wasserdurchfluß zu unterbinden, dadurch gekennzeichnet, daß die Beschichtung eine im allgemeinen zusammenhängende Masse von Latexteilchen ist und die Latexteilchen aus einem vernetzten Polymeren bestehen, das in organischer Flüssigkeit oder Öl auf das 2 bis 50 fache seines Volumens in ungequollenem Zustand aufquellen kann.

2. Verfahren nach Anspruch 1, dadurch gekennzeichnet, daß der durchlöcherte Körper zusammenhängend ist.

3. Verfahren nach Anspruch 1, dadurch gekennzeichnet, daß der durchlöcherte Körper teilchenförmig ist.

4. Verfahren nach Anspruch 1, dadurch gekennzeichnet, daß man den Druckabfall über den durchlöcherten Körper überwacht.

5. Verfahren nach Anspruch 2, dadurch gekennzeichnet, daß der durchlöcherte Körper ein offenzelliger Kunststoffschaum ist.

6. Vorrichtung zum Entfernen von organischer Flüssigkeit oder Öl aus Wasserströmen, die vorzugsweise nicht mehr als 1000 Gew.Tl./Million bezogen auf das Gewicht des Stromes an organischer Flüssigkeit oder Öl enthalten mit Einrichtungen, die einen den Strom aufnehmenden Kanal ausbilden, einem ersten durchlöcherten Absorberbett, das quer in dem Kanal angeordnet und für Wasser durchlässig ist und in festem Eingriff mit den den Kanal bildenden Einrichtungen steht, so daß der Wasserstrom im Kanal durch das Bett fließen muß, wobei der durchlöcherte Körper auf seiner Oberfläche eine organische Flüssigkeit oder Öl aufsaugende, bei Kontakt mit diesen Stoffen quellende Beschichtung in einer ausreichenden Menge aufweist, daß das durch organische Flüssigkeit oder Öl aufquellende Volumen ausreicht, um die Zwischenräume im durchlöcherten Körper auszufüllen und der Körper nicht mehr wasserdurchlässig ist, dadurch gekennzeichnet, daß die Beschichtung eine im allgemeinen zusammenhängende Masse von Latexteilchen ist und die Latexteilchen aus einem vernetzten Polymeren bestehen, das in organischer Flüssigkeit oder Öl auf das 2 bis 50 fache seines Volumens im ungequollenen Zustand aufquillt.

7. Vorrichtung nach Anspruch 6, dadurch gekennzeichnet, daß der durchlöcherte Körper zusammenhängend ist.

8. Vorrichtung nach Anspruch 6, dadurch gekennzeichnet, daß der durchlöcherte Körper teilchenförmig ist.

9. Vorrichtung nach Anspruch 6, dadurch gekennzeichnet, daß sie Einrichtungen zur Anzeige von Druckabfall über den durchlöcherten Körper aufweist.

10. Vorrichtung nach Anspruch 6, dadurch gekennzeichnet, daß der durchlöcherte Körper ein offenzelliger Kunststoffschaum ist.

## Revendications

1. Procédé pour l'élimination de liquides organiques ou d'huiles à partir d'un courant aqueux, les étapes du procédé consistant à faire passer un courant aqueux contenant moins de 1000 parties par million poids d'un liquide organique ou d'une huile, à travers un lit d'absorption comprenant au moins un premier corps poreux qui est apte à être traversé par l'écoulement d'eau, le corps poreux étant muni d'un revêtement absorbant les liquides organiques ou les huiles et pouvant gonfler au contact de ces matières, disposé sur sa surface en une quantité qui est suffisante pour que, par gonflement avec le liquide organique ou l'huile, le volume soit suffisant pour colmater les espaces interstitiels présents dans le corps poreux et empêcher l'écoulement de l'eau à travers ledit corps, caractérisé par le fait que le revêtement est une masse généralement cohérente de particules d'un latex, les particules de latex étant constituées par un polymère réticulé, et aptes à gonfler dans les liquides organiques ou les huiles à raison de 2 à 50 fois leur volume à l'état non gonflé.

2. Procédé selon la revendication 1, dans lequel le corps poreux est cohérent.

3. Procédé selon la revendication 1, dans lequel le corps poreux est particulaire.

4. Procédé selon la revendication 1, comprenant l'étape consistant à contrôler la chute de pression à travers le corps poreux.

5. Procédé selon la revendication 2, dans lequel le corps poreux est une mousse de matière plastique à cellules ouvertes.

6. Appareil pour l'élimination de liquides organiques ou d'huiles à partir de courants aqueux, les courants contenant de préférence pas plus de 1000 parties par million en poids de liquide oraganique ou d'huile par rapport au poids du courant, comprenant un moyen définissant un canal recevant le courant, un premier lit d'absorption poreux disposé transversalement dans le canal, le lit d'absorption étant perméable à l'eau et en engagement étanche avec le moyen définissant le canal, l'eau s'écoule dans ledit canal devant s'écouler à travers le lit, le corps poreux étant muni d'un revêtement absorbant les liquides organiques ou les huiles et pouvant gonfler au contact de ces matières, disposé sur sa surface en une quantité qui est suffisante pour que, par gonflement, le corps poreux soit colmaté et ne soit plus perméable au courant aqueux, caractérisé par le fait que le revêtement est une masse généralement cohérente de particules d'un latex polymère, qui gonfle à raison de 2 à 50 fois le volume à l'état non gonflé du revêtement lors de la mise en contact avec le liquide organique ou huile.

7. Appareil selon la revendication 6, dans lequel le corps poreux est un corps cohérent.

8. Appareil selon la revendication 6, dans lequel le corps poreux est un corps particulaire.

9. Appareil selon la revendication 6, comprenant un moyen pour indiquer la chute de pression à travers le corps poreux.

10. Appareil selon la revendication 6, dans lequel le corps poreux est une mousse de matière plastique.

*Fig. 1*

*Fig. 2*